# EUROPEAN PATENT APPLICATION

(11) **EP 2 816 810 A1**
(43) Date of publication of application: **24.12.2014**
(21) Application number: 13305840.4
(22) Date of filing: 20.06.2013
(51) Int. Cl.: H04N 21/25, H04M 1/725, H04N 21/2743, H04N 21/414, H04N 21/422, H04N 21/4223, H04N 21/4728, H04N 21/482, H04N 21/61, H04N 21/84

(54) **Method for managing a mobile camera implemented into a mobile terminal**

(71) Applicant: ALCATEL LUCENT, 92100 Boulogne-Billancourt (FR)
(72) Inventor: Durecu, Olivier, 91620 Nozay (FR); Delegue, Gérard, 91620 Nozay (FR)
(74) Representative: Sayettat, Julien Christian

(57) **Abstract**

Method for managing a mobile camera (1) implemented into a mobile terminal (2), said method providing for:
- capturing video frames by means of the mobile camera (1) and sending said captured frames to a media server (6) when said mobile camera is activated;
- continuously monitoring and sending geo localisation data of the current geographical position of said mobile terminal to the media server (6);

said method providing for sending minimised geo localisation data when the mobile camera (1) is deactivated and, in response to a notification (14) from the media server (6) for activating said camera, for sending maximised geo localisation data to said media server.

## Description

The invention relates to a method for managing a mobile camera implemented into a mobile terminal, an application comprising means for implementing such a process, a mobile terminal comprising a mobile camera and such an application, and an architecture for providing to a video consumer video frames that are captured in real time by a mobile camera implemented into such a mobile terminal.

Mobile phones are more and more equipped with a camera for capturing video frames. This is notably the case for smartphones, such as the range of Iphone® products or the range of Galaxy® products, which are commercialised respectively by the societies Apple® and Samsung®.

In particular, the users of such mobile phones can publish video frames they have captured in real time on media servers for sharing them with video consumers connected with their terminals to said servers.

Moreover, video frames are tagged with geo localisation data, such as GPS (Global Positioning System) data, corresponding to the geographical position of the mobile phone that have captured them, so that video consumers can choose said video frames according to the geographical position they are interested in.

The document US-2012/224826 describes a system for recording, uploading and archiving video contents that are captured by a mobile device. The captured video contents are tagged with date, time and geo localisation data, and stored in an online back end database which indexes the stored video contents according to such tags.

The article "Application development for geo-referenced audio video recording of the traffic system using mobile phones" (D. Perakovik, V. Remenar and I. Jovovic, DAAAM, 2009) analyses a solution for generating audio-video recordings with geo localization references on the traffic network. In this solution, the audio-video recordings and geo localization data are saved simultaneously.

Moreover, Vyclone® is a collaborative video making application available for mobile phones, said application providing, as multiple users of said application capture video contents of a same event at a same geographical position, for editing all of these captured contents together so as to create a multi camera short documentary video content of said event. In particular, any user of a mobile phone that is using the mobile camera of said phone and is localised within hundred meters of a user of the Vyclone® application can be considered as a collaborator, so that his captured video content will be integrated in the final short documentary video content.

Besides, Ubipix® is a geo localisation based multimedia mapping application for smartphones, which enables its users to capture, tag, upload and share their captured video contents about their trails, holiday adventures, journeys, recreational pursuits, i.e. real life events, as well as commercial applications. This application notably enables full motion video and images, together with tags and geo localisation data to be recorded. Moreover, this video contents with geo localisation tags can be uploaded on social network channels, such as Facebook®.

Thus, many solutions exist for video frames that have been recorded and shared on media servers with their geo localisation tag. However, the sharing in real time of video frames with geo localisation tags is more complex to implement, and several characteristics have to be taken into account.

At first, a video consumer that is interested in video frames captured in a given geographical position should be able to find in real time the video frames tagged with geo localisation data corresponding to said position. In particular, the video consumer should find in real time a mobile camera available in the interesting geographical position, which is possible only if the user of said camera has given his authorisation.

Moreover, the video consumer should be notified about the movements of mobile cameras. Indeed, users of mobile phones with mobile camera may enter or leave a dedicated geographical position at any time, so that the video consumer interested in said geographical position should be provided with the most interesting video frames at any time.

Thus, once the video consumer has localised a video camera in the interesting geographical position and the user of said camera has given his authorisation for sharing video frames from said camera, said video consumer should be able to remotely activate said camera.

To that end, the society Google® has implemented a service in Norway, wherein geo localised live video streams are broadcasted on the Google Street View® platform through the media hosting platform Youtube®, as explained in further details in the article http://searchengineland.com/google-testing-youtube-video-stream-in-street-view-39234. Moreover, pre recorded video contents are currently available on the Google Map® and Google Earth® platforms, so that users of said platform can access to video contents through geographical maps. However, these solutions are not well adapted to manage video frames that are captured by moving cameras, and the cameras that capture video contents for above platforms cannot be remotely activated.

The document US-2009/0063419 describes a real time peer to peer sharing system of video contents that are captured by mobile phones with mobile cameras, wherein metadata streams that describes a context of video contents, especially the geographical position of the mobile phones that capture said contents, are sent to a metadata repository contemporaneously with the capture of said video contents. Thus, a video consumer can consult the metadata stored in the repository for searching metadata corresponding to his interests and send a network query via said metadata to retrieve a video content corresponding to said interests, so that said content will be sent to said video consumer.

In general, the above solutions generate a large amount of metadata, especially concerning geo localisation data and their simultaneous transmission with video contents to dedicated media servers. This causes a large consumption of bandwidth which can interfere with the proper use of mobile devices embedding mobile cameras, notably in terms of battery consumption and autonomy.

In particular, in the document US-2009/0063419, the mobile phones capturing the video contents have to send continuously metadata streams, even if they are not sought by video consumers for their captured video contents. Thus, the bandwidth and the battery of the mobile phones are uselessly consumed.

The invention aims to improve the prior art by proposing a solution for providing in real time to video consumers video frames that are captured by a mobile camera implemented into a mobile terminal and data of the geographical position of said mobile terminal, wherein the sending of geo localisation data of said mobile terminal is optimised according to the effective using of said camera, so as to preserve the bandwidth and the battery of said terminal.

For that purpose, and according to a first aspect, the invention relates to a method for managing a mobile camera implemented into a mobile terminal, said method providing for:
- capturing video frames by means of the mobile camera and sending said captured frames to a media server when said mobile camera is activated;
- continuously monitoring and sending geo localisation data of the current geographical position of said mobile terminal to the media server;
said method providing for sending minimised geo localisation data when the mobile camera is deactivated and, in response to a notification from the media server for activating said camera, for sending maximised geo localisation data to said media server.

According to a second aspect, the invention relates to an application for managing a mobile camera implemented in a mobile terminal for capturing video frames, said application comprising:
- a module for sending the captured video frames to a media server when said camera is activated;
- a geo localisation module for continuously monitoring and sending geo localisation data of the current geographical position of said mobile terminal to the media server ;
- a user agent module comprising means for activating the mobile camera in response to a notification for such an activation from the media server, said user agent module further comprising means for controlling the geo localisation module to send minimised geo localisation data when the mobile camera is deactivated and to send maximised geo localisation data when the mobile camera is activated.

According to a third aspect, the invention relates to a mobile terminal implementing a mobile camera for capturing video frames, said mobile terminal comprising an application for managing said mobile camera, said application comprising:
- a module for sending the captured video frames to a media server when said camera is activated;
- a geo localisation module for continuously monitoring and sending geo localisation data of the current geographical position of said mobile terminal to the media server;
- a user agent module comprising means for activating the mobile camera in response to a notification for such an activation from the media server, said user agent module further comprising means for controlling the geo localisation module to send minimised geo localisation data when the mobile camera is deactivated and to send maximised geo localisation data when the mobile camera is activated.

According to a fourth aspect, the invention relates to an architecture for providing to a video consumer video frames that are captured in real time by a mobile camera, said architecture comprising:
- a mobile terminal implementing the mobile camera, said mobile terminal comprising an application for managing said mobile camera, said application comprising:
   ■ a module for sending the captured video frames when said camera is activated;
   ■ a geo localisation module for continuously monitoring and sending geo localisation data of the current geographical position of said mobile terminal;
   ■ a user agent module comprising means for activating the mobile camera and means for sending an activation authorisation of the user of said mobile terminal, said user agent module further comprising means for controlling the geo localisation module to send minimised geo localisation data when the mobile camera is deactivated and to send maximised geo localisation data when the mobile camera is activated;
- a terminal through which said video consumer receives in real time said captured video frames, said terminal comprising an application which comprises:
   ■ a module for continuously displaying said video frames;
   ■ a dynamic exploration module comprising means for enabling the video consumer to subscribe to a geographical position, said dynamic exploration module comprising means for sending a notification upon such a subscription;
- a media server comprising means for storing video frames sent by the mobile terminal, said media server comprising an application that comprises:
   ■ an authorisation module comprising means for receiving an activation authorisation of the user of the mobile terminal;
   ■ a remote activation module comprising means for sending to the mobile terminal a notification for activating the mobile camera;
   ■ a location module comprising means for storing geo localisation data sent by the mobile terminal, means for receiving the subscription notification from the terminal of the video consumer, means for matching the geographical position to which said video consumer has subscribed with said stored geo localisation data, means for sending to the terminal of said consumer a notification when one of said stored data corresponds to said subscribed geographical position, such as means for interacting with the authorisation module and the remote activation module for the sending of the activation notification to the mobile terminal that has sent the corresponding stored data.

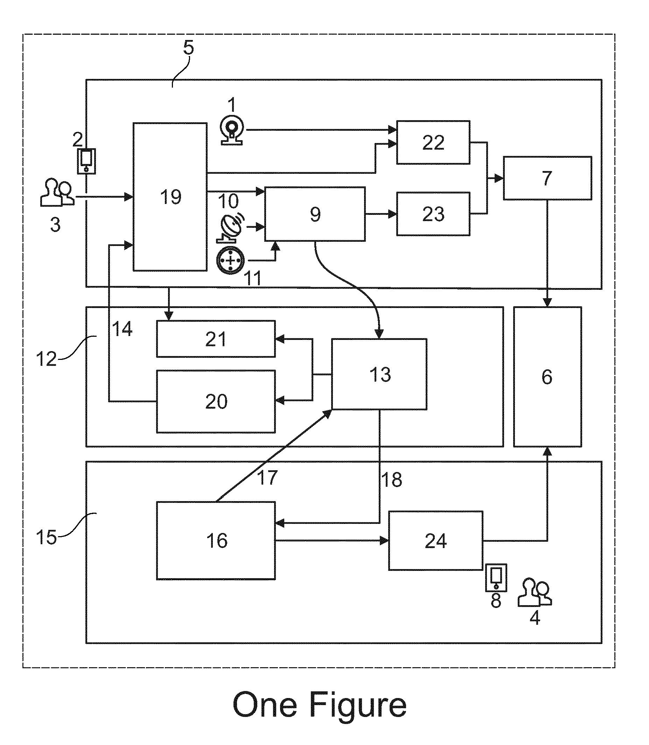

Other aspects and advantages of the invention will become apparent in the following description made with reference to the appended figure, which represents schematically an architecture comprising means for implementing the method of the invention.

In relation to this figure, a method for managing a mobile camera 1 implemented into a mobile terminal 2 of a user 3, such as an architecture for providing to a video consumer 4 video frames that are captured in real time by the mobile camera 1 will be described below.

The mobile terminal 2 can be notably a smartphone and comprises an application 5 for managing its mobile camera 1.

The process provides for capturing video frames by means of the mobile camera 1 and for sending said captured video frames to a media server 6 when said mobile camera is activated. In relation to the figure, the application 5 comprises a module 7 for sending the captured video frames to such a media server 6 that further comprises means for storing said video frames. Thus, the video consumer 4 can connect to the media server 6 through his terminal 8, such as a smartphone, to access to said video frames.

The method further provides for continuously monitoring and sending geo localisation data of the current geographical position of the mobile terminal 2 to the media server 6. To do so, the application 5 comprises a geo localisation module 9 for continuously monitoring and sending geo localisation data of the current geographical position of the mobile terminal 2 to the media server 6.

In particular, the geo localisation data comprises at least geographical position data, such as geographical coordinates, for example from the Global Positioning System (GPS), and orientation data. In relation to the figure, the mobile terminal 2 comprises a device 10, as for example a GPS device, for measuring coordinates of the geographical position of said terminal, such as a device 11, as for example a digital compass, for evaluating the orientation in space of said mobile terminal, the geo localisation module 9 computing geographical position data and orientation data respectively from said coordinates and said orientation in space.

Moreover, the media server 6 comprises an application 12 that comprises a location module 13, said module comprising means for storing the geo localisation data of the current geographical position of the mobile terminal 2. In particular, the geo localisation module 9 of the application 5 comprises means for establishing a connection with the location module 13, notably by sending first a login, as for example a name that will be used on the media server 6 for identifying the video frames to be sent by the mobile terminal 2. Thus, once the connection has been established, the geo localisation module 9 continuously manages and sends the geo localisation data to the location module 13.

The method further provides for activating the mobile camera 1 in response to a notification 14 from the media server 6 for such an activation. In particular, the notification 14 for activating the mobile camera 1 can be sent by the media server 6 when the geo localisation data sent to said server correspond to a geographical position to which the video consumer 4 has subscribed.

To do so, the terminal 8 of the video consumer 4 comprises an application 15, which comprises a dynamic exploration module 16, said module comprising means for enabling said video consumer to subscribe to a geographical position, notably a geographical position said video consumer is interested in. In particular, the subscription means of the dynamic exploration module 16 can provide a graphical user interface (GUI) on which the video consumer 4 can subscribe to a geographical position by entering said geographical position manually or by selecting said geographical position in a pre determined list.

In particular, the video consumer 4 can subscribe to an absolute geographical position, i.e. with accurate geographical coordinates and/or orientation, or to a relative geographical position, i.e. a geographical position which depends on the own geographical position of said video consumer. To do so, the dynamic exploration module 16 can comprise means for interacting with a geo localisation device implemented in the terminal 8, as for example a GPS (Global Positioning System) device, so as to subscribe to a geographical position according to the own position of said terminal, as for example for accessing to video frames coming from mobile terminals 2 that are located at a certain distance from said terminal.

As the video consumer 4 has subscribed to a geographical position, the dynamic exploration module 16 comprises means for sending a notification 17 to the media server 6 upon such a subscription. In relation to the figure, the dynamic exploration module 16 sends the subscription notification 17 to the location module 13, said location module comprising means for receiving said notification.

Moreover, the location module 13 comprises means for matching the geographical position to which the video consumer 4 has subscribed with the stored geo localisation data, such as means for sending to the terminal 8 of said video consumer a notification 18 when one of said stored data corresponds to said subscribed geographical position.

In particular, the location module 13 searches, among the stored geo localisation data, the geo localisation data corresponding to the nearest geographical position of the subscribed geographical position, and sends to the dynamic exploration module 16 a notification 18 comprising the login of the corresponding mobile terminal 2.

Thus, as new events occur, such as the sending of new geo localisation data by new mobile terminals 2, the means for matching of the location module 13 are adapted to analyse the impacts of such events on the relevancy of their matching, so as to send correct up-to-date notifications 18 to the video consumers 1.

Upon the receipt of the notification 18, the dynamic exploration module 16 can display a message on the terminal 8, for example for proposing to said consumer to access to the video frames coming from the corresponding mobile terminal 2, so that said consumer can accept said proposition for triggering the activation of the mobile camera 1 of said mobile terminal and the sending of video frames to the media server 6.

In relation to the figure, the application 12 of the media server 6 comprises a remote activation module 20 comprising means for sending to the mobile terminal 2 a notification 14 for activating the mobile camera 1. In particular, once the video consumer 4 has accepted to access to the video frames of the mobile terminal 2 the geo localisation data of which correspond to the geographical position said consumer has subscribed the location module 13 interacts with the remote activation module 20 for the sending of the notification 14 to said mobile terminal.

Moreover, the application 5 comprises a user agent module 19 comprising means for activating the mobile camera 1 in response to the notification 14. In particular, the remote activation module 15 can also interact with the user agent module 19 to check if the mobile camera 1 is activated and, if it is not the case, said remote activation module sends the notification 14 to said user agent module to do the activation.

Before activating the mobile camera 1, the method can provide the prior sending of an activation authorisation of the user 3 of the mobile terminal 2 to the media server 6, the activation of said mobile camera and thus the sending of the video frames captured by said camera being triggered according to such an authorisation.

To do so, the user agent module 19 comprises means for prior sending an activation authorisation of the user 3 of the mobile terminal 2 to the media server 6. Moreover, the application 12 comprises an authorisation module 21 that comprises means for receiving such an activation authorisation.

In the activation authorisation, the user 3 of the mobile terminal 2 can specify the requirements for activating his mobile camera 1, as for example the authorised video consumers 4, the time period and/or the location wherein such an activation can occur. Thus, the activation of the mobile camera 1 can be accomplished without any human intervention, which is particularly advantageous when the mobile camera 1 must be activated as the user 3 is not able to do it manually, as for example if said user is driving a car.

Thus, when the video consumer 4 wants to access to the video frames captured by the video camera 2, the location module 13 also interacts with the authorisation module 21 to check if the user 3 has authorised the activation of said camera in the current context. If it is the case, the location module 13 interacts with the remote activation module 20 for sending the notification 14 to activate the mobile camera 2.

When the mobile camera 1 is activated, the module 7 sends the video frames captured by said camera to the media server 6, so that the video consumer 4 can access to said video frames through his terminal 8.

In particular, the video frames are encapsulated with the geo localisation data in a multimedia container to be sent to the media server 6. To do so, the application 5 comprises a module 22 for encoding the video frames captured by the mobile camera 1, such as a module 23 for coding the geo localisation data provided by the geo localisation module 9 to be sent to the media server 6, for example by binarising and streaming said geo localisation data. Moreover, the module 7 for sending comprises means for encapsulating the encoded video frames and encoded geo localisation data provided by respectively the encoding modules 22, 23 in a multimedia container to be sent to the media server 6.

Afterwards, the media server 6 publishes the multimedia stream comprising the video frames and their geo localisation data with a multimedia stream login, so as to enable video consumers 4 connected to said media server to find easily said video frames.

The application 15 of the terminal 8 comprises a module 24 for continuously displaying video frames, said module comprising means for retrieving said video frames from the media server 6.

In particular, the continuous displaying module 24 can be configured according to several modes. For example, the continuous displaying module 24 can comprise a single video mode wherein only the video frames of the last multimedia stream published on the media server 6 are displayed on the terminal 8. In that case, the module 24 can be notably adapted to switch between multimedia streams without any interruption by starting the last stream before stopping the former one.

The continuous display module 24 can also comprise a mosaic mode wherein the video frames of the last N multimedia streams published on the media server 6, N being an integer which can be predefined notably by the video consumer 4.

As described before, the user 3 of a mobile terminal 2 who agrees to share its captured video frames has to send continuously the geo localisation data of his current geographical position to the media server 6, so as to be apparent to video consumers 4 that may be interested in said geographical position, and that even when the camera 1 is deactivated. However, such a continuous communication may request uselessly the geo localisation devices 10, 11, and thus the battery of the mobile terminal 2, such as the available bandwidth.

To avoid these shortcomings, the method provides for taking into account the current state of the mobile camera 1 by sending minimised geo localisation data when said mobile camera is deactivated. To do so, the user agent module 19 comprises means for controlling the geo localisation module 9 to send minimised geo localisation data to the media server 6 when the mobile camera 1 is deactivated.

In particular, the minimised geo localisation data can comprise only one of the geographical position data and orientation data, notably the geographical position data that are sufficient to render the mobile camera 1 apparent for the video consumers 4 connected to the media server 6. In relation to the figure, when the mobile camera 1 is deactivated, the user agent module 19 controls the geo localisation module 9 so that only the data provided by the coordinate measuring device 10 are sent as geo localisation data to the media server 6.

Moreover, the process provides for sending maximised geo localisation data in response to the notification 14 for activating the mobile camera 1, the maximised geo localisation data comprising both geographical position data and orientation data. To do so, the means for controlling of the user agent module 19 are adapted for sending such maximised geo localisation data in response to such a notification 14.

Thus, when the user agent module 19 receives from the remote activation module 20 a notification 14 for activating the mobile camera 1, said user agent module controls the geo localisation module 9 so that the data of the orientating device 9 are sent as geo localisation data in addition to the data of the coordinate measuring device 8.

Moreover, for saving the battery and the available bandwidth in general, the method can provide for filtrating the monitored geo localisation data to identify the most relevant geo localisation data, said relevant geo localisation data being sent to be stored in the media server 5. To do so, the geo localisation module 7 comprises means for doing such a filtration.

In particular, the monitored geo localisation data can be filtrated by comparing the distance measured between said monitored geo localisation data and the last geo localisation data sent to the media server 6 to a threshold, so that the monitored data are send to replace the last sent geo localisation data data when said distance is greater than said threshold. To do so, the means for filtrating of the geo localisation module 9 are adapted to do such a comparison.

Thus, the geo localisation module 9 provides only useful geographical positions of the mobile terminal 2 to the media server 6, i.e. by updating the geographical position of said mobile terminal memorised by the media server 6 only when a significant movement of said terminal happens.

When the mobile camera 1 is activated, the value of the threshold is minimised, so that the geo localisation module 9 sends to the media server 6 geo localisation data with an increased precision. On the contrary, when the mobile camera 1 is deactivated, the value of the threshold is maximised to send geo localisation data less frequently and thus to save the battery and available bandwidth.

To do so, the means for filtrating of the geo localisation module 9 are adapted to use a threshold with a maximised value when the mobile camera 1 is deactivated, whereas said means for filtrating will use a threshold with a minimised value when said camera will be activated.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for managing a mobile camera (1) implemented into a mobile terminal (2), said method providing for:
- capturing video frames by means of the mobile camera (1) and sending said captured frames to a media server (6) when said mobile camera is activated;
- continuously monitoring and sending geo localisation data of the current geographical position of said mobile terminal to the media server (6);
said method being **characterized in that** it provides for sending minimised geo localisation data when the mobile camera (1) is deactivated and, in response to a notification (14) from the media server (6) for activating said camera, for sending maximised geo localisation data to said media server.

2. Method according to claim 1, **characterized in that** it provides the prior sending of an activation authorisation of the user (3) of the mobile terminal (2) to the media server (6), the activation of the mobile camera (1) being triggered according to such an authorisation.

3. Method according to claim 1 or 2, **characterized in that** the geo localisation data comprise at least geographical position data and orientation data.

4. Method according to claim 3, **characterized in that** the maximised geo localisation data comprise both geographical position data and orientation data, and the minimised geo localisation data comprise only geographical position data.

5. Method according to any of claims 1 to 4, **characterized in that** it provides for filtrating the monitored geo localisation data to identify the most relevant geo localisation data, said relevant geo localisation data being sent to the media server (6).

6. Method according to claim 5, **characterized in that** the monitored geo localisation data are filtrated by comparing the distance measured between said monitored geo localisation data and the last geo localisation data sent to the media server (6) to a threshold, said monitored data being send to the media server (6) to replace said last sent data when said distance is greater than said threshold.

7. Method according to claim 6, **characterized in that** the value of the threshold is maximised - respectively minimised - when the mobile camera (1) is deactivated - respectively activated.

8. Method according to any of claims 1 to 7, **characterized in that** the video frames are encapsulated with the geo localisation data in a multimedia container to be sent to the media server (6).

9. Method according to any of claims 1 to 8, **characterized in that** the notification (14) for activating the mobile camera (1) is sent by the media server (6) when the geo localisation data sent to said server correspond to a geographical position to which a video consumer (4) connected to said server has subscribed.

10. Application (5) for managing a mobile camera (1) implemented in a mobile terminal (2) for capturing video frames, said application comprising:
- a module (7) for sending the captured video frames to a media server (6) when said camera is activated;
- a geo localisation module (9)for continuously monitoring and sending geo localisation data of the current geographical position of said mobile terminal to the media server (6);
- a user agent module (19) comprising means for activating the mobile camera (1) in response to a notification (14) for such an activation from the media server (6), said user agent module further comprising means for controlling the geo localisation module (9) to send minimised geo localisation data when the mobile camera (1) is deactivated and to send maximised geo localisation data when the mobile camera (1)is activated.

11. Mobile terminal (2) implementing a mobile camera (1) for capturing video frames, said mobile terminal comprising an application (5) for managing said mobile camera, said application comprising:
- a module (7) for sending the captured video frames to a media server (6) when said camera is activated;
- a geo localisation module (9) for continuously monitoring and sending geo localisation data of the current geographical position of said mobile terminal to the media server (6);
- a user agent module (19) comprising means for activating the mobile camera (1) in response to a notification (14) for such an activation from the media server (6), said user agent module further comprising means for controlling the geo localisation module (9) to send minimised geo localisation data when the mobile camera (1) is deactivated and to send maximised geo localisation data when the mobile camera (1) is activated.

12. Architecture for providing to a video consumer (4) video frames that are captured in real time by a mobile camera (1), said architecture comprising:
- a mobile terminal (2) implementing the mobile camera (1), said mobile terminal comprising an application (5) for managing said mobile camera, said application comprising:
■ a module (7) for sending the captured video frames when said camera is activated;
■ a geo localisation module (9) for continuously monitoring and sending geo localisation data of the current geographical position of said mobile terminal;
■ a user agent module (19) comprising means for activating the mobile camera (1) and means for sending an activation authorisation of the user (3) of said mobile terminal, said user agent module further comprising means for controlling the geo localisation module(9) to send minimised geo localisation data when the mobile camera (1) is deactivated and to send maximised geo localisation data when the mobile camera (1) is activated;
- a terminal (8) through which said video consumer receives in real time said captured video frames, said terminal comprising an application (15) which comprises:
■ a module (24) for continuously displaying said video frames;
■ a dynamic exploration module (16) comprising means for enabling the video consumer (4) to subscribe to a geographical position, said dynamic exploration module comprising means for sending a notification (17) upon such a subscription;
- a media server (6) comprising means for storing video frames sent by the mobile terminal (2), said media server comprising an application (12) that comprises:
■ an authorisation module (21) comprising means for receiving an activation authorisation of the user (3) of the mobile terminal (3);
■ a remote activation module (20) comprising means for sending to the mobile terminal (2) a notification (14) for activating the mobile camera (1);
■ a location module (13) comprising means for storing geo localisation data sent by the mobile terminal (2), means for receiving the subscription notification (17) from the terminal (8) of the video consumer (4), means for matching the geographical position to which said video consumer has subscribed with said stored geo localisation data, means for sending to the terminal (8) of said consumer a notification (18) when one of said stored data corresponds to said subscribed geographical position, such as means for interacting with the authorisation module (21) and the remote activation module (20) for the sending of the activation notification (14) to the mobile terminal (2) that has sent the corresponding stored data.
